(19) **Europäisches Patentamt / European Patent Office / Office européen des brevets**

(11) **EP 4 169 886 A1**

(12) # EUROPEAN PATENT APPLICATION
published in accordance with Art. 153(4) EPC

(43) Date of publication:
26.04.2023 Bulletin 2023/17

(21) Application number: 21826415.8

(22) Date of filing: 16.06.2021

(51) International Patent Classification (IPC):
$C04B\ 18/08$ (2006.01)  $C04B\ 18/14$ (2006.01)
$C04B\ 22/06$ (2006.01)  $C04B\ 22/08$ (2006.01)
$C04B\ 28/04$ (2006.01)  $C04B\ 28/08$ (2006.01)

(52) Cooperative Patent Classification (CPC):
C04B 18/08; C04B 18/14; C04B 22/06;
C04B 22/08; C04B 28/04; C04B 28/08;
Y02W 30/91

(86) International application number:
PCT/JP2021/022805

(87) International publication number:
WO 2021/256484 (23.12.2021 Gazette 2021/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.06.2020 JP 2020105430

(71) Applicant: Taisei Corporation
Tokyo 163-0606 (JP)

(72) Inventors:
• OGINO, Masataka
  Tokyo 163-0606 (JP)
• OWAKI, Eiji
  Tokyo 163-0606 (JP)
• KAJIO, Tomohiro
  Tokyo 163-0606 (JP)

(74) Representative: Lahrtz, Fritz
Simmons & Simmons LLP
Lehel Carré Thierschplatz 6
80538 München (DE)

(54) **HYDRAULIC COMPOSITION, HYDRAULIC COMPOSITION MIXED MATERIAL, AND HARDENED BODY**

(57) The present invention addresses the problem of proposing: a hydraulic composition which is capable of stably holding and storing CO2 recovered from the atmosphere, while being reduced in the cost; and a hardened body which is formed from this hydraulic composition. The present invention is a hydraulic composition which contains calcium carbonate. The proportion of the calcium carbonate in the materials is within the range of from 30% by mass to 95% by mass. In addition, this hydraulic composition contains at least one substance that is selected from among blast furnace slag, expansive admixture, slaked lime, calcined lime, fly ash and Portland cement. Incidentally, in cases where Portland cement is contained therein, the proportion of the Portland cement in the materials excluding the calcium carbonate is 30% by mass or less. In cases where expansive admixture is contained therein, the proportion of the expansive admixture in the materials is from 2% by mass to 9% by mass.

FIG. 1

EP 4 169 886 A1

**Description**

**TECHNICAL FIELD**

The present invention relates to a hydraulic composition containing calcium carbonate, a hydraulic composition mixed material containing the hydraulic composition, and a hardened body formed by the hydraulic composition or the hydraulic composition mixed material.

**BACKGROUND ART**

Upon forming a construction element, calcium carbonate is sometimes added to concrete, mortar, and cement paste in order to reduce $CO_2$ (carbon dioxide) emission or improve fire resistance. For example, Patent Document 1 disclosed a cement-based material containing cement, calcium carbonate, an aggregate, an additive, and a porous material.

Recently, a technology producing calcium carbonate by collecting $CO_2$ has been developed. Calcium carbonate produced by this technology fixes $CO_2$ existing in the atmosphere or exhaust gas. By putting calcium carbonate into a hydraulic composition, $CO_2$ is fixed and stored, which could result in a reduction of $CO_2$ emission. Further, since endothermic reaction occurs under high temperature, calcium carbonate absorbs ambient heat and develops self-extinguishing. Thereby, a building material using calcium carbonate is to be a material being resistant to heat.

**PRIOR ART DOCUMENT**

**Patent Document**

Patent Document 1: Japanese Patent Application Publication 2020-051117

**SUMMARY OF THE INVENTION**

**Problems to be Solved**

The present invention intends to provide a hydraulic composition which is capable of stably holding and storing $CO_2$ collected from the atmosphere as well as reducing a cost, a hydraulic composition mixed material containing the hydraulic composition, and a hardened body formed by the hydraulic composition or the hydraulic composition mixed material.

**Solutions to Problems**

The present invention relates to a hydraulic composition containing calcium carbonate, a hydraulic composition mixed material containing the hydraulic composition, and a hardened body formed by the hydraulic composition or the hydraulic composition mixed material. A content of said calcium carbonate in the hydraulic composition is in a range of 30 percent by mass to 95 percent by mass, preferably 40 percent by mass to 95 percent by mass, more preferably 60 percent by mass to 95 percent by mass.

The hydraulic composition preferably contains at least one material selected from blast furnace slag, an expansive additive, slaked lime, quick lime, fly ash and Portland cement, in addition to calcium carbonate. Especially, blast furnace slag, slaked lime and an expansive additive are preferably contained.

Further, in a case of containing Portland cement, a content of said Portland cement in the materials except for said calcium carbonate is 70 percent by mass and below, preferably 30 percent by mass and below.

Furthermore, a content of an expansive additive to the total of materials of the hydraulic composition is preferably 2 to 9 percent by mass.

According to the hydraulic composition, excellent fluidity is exerted before hardening and sufficient strength is obtained after hardening, as well as $CO_2$ emission is reduced by reducing an amount of cement usage, and $CO_2$ is stably held and stored by using calcium carbonate. Further, the hydraulic composition contributes to use resources efficiently since it contains a lot of industrial byproducts such as blast furnace slag, fly ash and the like. Furthermore, a material being excellent in fire resistance is able to be produced since the hydraulic composition contains a lot of calcium carbonate.

Moreover, according to the hydraulic composition, in addition to holding $CO_2$ by using calcium carbonate, a reaction of carbonation occurs during an in-service period, thereby $CO_2$ is taken from the atmosphere.

In a case of constructing a reinforced concrete structure by using a hydraulic composition of the present invention, effectiveness of rust prevention of a reinforcement such as reinforcing bar and the like in concrete sometime reduces when too much carbonation reaction occurs during an in-service period. In such a case, a nitrate compound is preferably contained in the hydraulic composition at a content of 1 to 3 percent by mass, by calculating as a nitrate ion ($NO_3^-$, formula weight: 62), to 100 percent by mass of said hydraulic composition.

Further, a hydraulic composition mixed material of the present invention may contain the hydraulic composition described above, and at least one material selected from a fiber material, an aggregate, and a chemical admixture.

A hardened body formed by the hydraulic composition described above or the hydraulic composition mixed material described above is obtained by adding water to the hydraulic composition described above or the hydraulic composition mixed material described above, mixing them, and letting a certain curing period be passed.

## Advantageous Effects of the invention

According to the hydraulic composition, the hydraulic composition mixed material and the hardened body of the present invention, by adding a lot of calcium carbonate, $CO_2$ emission is reduced, $CO_2$ is stably held and stored, and a cost is reduced.

## BRIEF DESCRIPTION OF DRAWINGS

FIG. 1 is a graphical representation of experimental results conducted for hydraulic compositions, indicating relationships between calcium carbonate contents in hydraulic compositions and carbonation rates.

FIG. 2 is a graphical representation indicating relationships between strengths of hardened bodies of hydraulic composition mixed materials containing hydraulic compositions at a material age of 28 days and quantities of cement per unit volumes.

FIG. 3 is a graphical representation indicating relationships between calcium carbonate contents in hydraulic compositions and compressive strengths of hardened bodies of hydraulic composition mixed materials containing hydraulic compositions at a material age of 28 days.

FIG. 4 is a graphical representation indicating relationships between Portland cement contents in powder of hydraulic compositions except for calcium carbonate and ratios of compressive strength when a standard in which Portland cement in powder except for calcium carbonate is 100 percent is used.

FIG. 5 is a graphical representation indicating relationships between the number of the elapsed days from an initial setting time and shrinkage strain when expansive additive amounts are changed in hydraulic composition mixed materials.

FIG. 6 is a graphical representation indicating relationships between the number of the elapsed days from an initial setting time and shrinkage strain when expansive additive amounts are changed in hydraulic composition mixed materials.

FIG. 7 is a graphical representation of experimental results of an accelerated weathering test conducted for hardened bodies, indicating relationships between color differences and accelerated times.

## DETAILED DESCRIPTION OF EMBODIMENTS

The present embodiment, in which the object is to reduce $CO_2$ emission and stably hold and store $CO_2$, describes a hydraulic composition, a hydraulic composition mixed material, and a hardened body being able to collect a lot of $CO_2$ from the atmosphere.

The hydraulic composition of the present embodiment is composed of powder containing, in addition to calcium carbonate (CaCOs), at least one selected from the group of blast furnace slag, an expansive additive, slaked lime, quick lime, fly ash and Portland cement.

The hydraulic composition mixed material of the present embodiment contains, in addition to the hydraulic composition described above, an aggregate of sand, gravel, and the like; a chemical agent of a chemical admixture for concrete, and the like; a fiber material formed of a metal or polymer material; and the like.

The hardened body of the hydraulic composition is formed by hardening paste obtained by mixing the hydraulic composition described above and water. The hardened body of the hydraulic composition mixed material is formed by hardening a mixture (corresponds to flesh mortar or flesh concrete) obtained by mixing water into the hydraulic composition mixed material, which corresponds to mortar or concrete.

A calcium carbonate (CaCOs) content in said powder (a calcium carbonate (CaCOs) content accounting for the hydraulic composition) is in a range of 30 percent by mass to 95 percent by mass, preferably 40 percent by mass to 95 percent by mass, more preferably 60 percent by mass to 95 percent by mass. As calcium carbonate (CaCOs), for example, natural calcium carbonate which is called heavy calcium carbonate or limestone powder obtained by crushing and classifying lime stones, and synthetic calcium carbonate which is called light calcium carbonate or precipitated calcium carbonate obtained by precipitating fine crystals in a chemical reaction, are usable. Note that calcium carbonate produced by collecting $CO_2$ is also used as precipitated calcium carbonate since it is synthesized in a reaction of calcium and $CO_2$.

For blast furnace slag, ground granulated blast furnace slag used for "Portland blast-furnace slag cement" according to JIS (Japan Industrial Standard) R5211 or ground granulated blast furnace slag conforming to "blast furnace slag for concrete" according to JIS A6206 is desirably used. Further, blast furnace slag with a specific surface area of 2000 to 10000 $cm^2$/g, preferably 3500 to 7000 $cm^2$/g, is desirably used.

For an expansive additive, for example, an expansive additive defined as "expansive additive for concrete" according to JIS A6202 may be used. The expansive additive is desirably added at a content of 2 to 9 percent by mass to the total of the hydraulic composition.

For slaked lime, for example, slaked lime defined as "lime for industrial usages" according to JIS R9001 may be used. Further, since quick lime becomes slaked lime by contacting with water, for example, quick lime defined as "lime for industrial usages" according to JIS R9001 may be used as an alternative of slaked lime. Note that, in this case, the quantity of water needed for the change of quick lime to slaked lime is better to have been corrected.

For fly ash, for example, fly ash conforming to "fly ash for concrete" of JIS A6201 may be used.

For Portland cement, ordinary Portland cement is used, other than that, Portland cement defined as "Portland cement" conforming to JIS R5210 such as moderate-heat Portland cement, low-heat Portland cement, high-early-strength Portland cement, ultra-early-strength Portland cement, sulfate-resistant Portland cement, and the like, and "Ecocement" conforming to JIS R5214, are usable.

In a case of containing Portland cement in a hydraulic composition, a content of Portland cement in powder except for calcium carbonate (CaCOs) is 70 percent by mass and below, preferably 30 percent by mass and below.

Further, in a case of using Portland cement and blast furnace slag or fly ash, for example, "Portland blast-furnace slag cement" according to JIS R5211, or "Portland fly-ash cement" according to JIS R5213 may be respectively used alone, or may be used as a mix.

According to the hydraulic composition of the present embodiment, required strength is exerted after hardening. Further, according to the hydraulic composition of the present embodiment, $CO_2$ emission from a production of Portland cement is reduced by reducing cement usage or omitting Portland cement usage, and $CO_2$ collected and fixed from the atmosphere or exhaust gas may be stably held and stored. The hydraulic composition of the present embodiment, in which calcium carbonate (CaCOs) is mixed in a highly eco-friendly hydraulic composition containing at least one selected from the group of blast furnace slag, an expansive additive, slaked lime, quick lime, fly ash and Portland cement, may prevent a reduction of strength, even though the calcium carbonate (CaCOs) ratio to the quantity of powder is increased as compared to a hydraulic composition in which calcium carbonate (CaCOs) is mixed in ordinary Portland cement. Further, a mix proportion containing a lot of blast furnace slag prevents a reduction of strength more.

Moreover, the hydraulic composition of the present embodiment may produce a material having excellent fire resistance since it contains a lot of calcium carbonate (CaCOs). The hydraulic composition of the present embodiment has an ability of self-quenching in the event of fire since calcium carbonate (CaCOs) induces an endothermic reaction: $CaCO_3 \rightarrow CaO + CO_2$, at high temperature (500 to 900 °C).

Hereinafter, experimental results conducted for hydraulic compositions of the present embodiment are described.

(1) Carbonation rates

For hardened bodies (Cases a to j) of hydraulic compositions in which calcium carbonate (CaCOs) contents accounting for hydraulic compositions were 0 to 5 percent by mass and the other materials were mixed at contents described in Table 1, rates of $CO_2$ absorption from the atmosphere (namely carbonation rate) were measured under an accelerated condition with a $CO_2$ concentration of 5 percent. As shown in Table 1, in each Case, a to c, blast furnace slag, an expansive additive, slaked lime were contained at different contents respectively as powder materials except for calcium carbonate (CaCOs) composing a hydraulic composition. In Case d, only Portland cement and blast furnace slag were contained as powder materials. In Case e, calcium carbonate (CaCOs), Portland cement and blast furnace slag were contained as powder materials composing a hydraulic composition. Further, in Case f, Portland cement, blast furnace slag and fly ash were contained as powder materials. Note that, mix proportions of Cases d and f were mix proportions for a case where a reduction of environmental load without using calcium carbonate (CaCOs) was intended. In Case g, calcium carbonate (CaCOs), Portland cement, blast furnace slag and fly ash were contained as powder materials. Furthermore, in Cases h to j, only Portland cement was added in a range of 50 to 100 percent by mass as a powder material except for calcium carbonate (CaCOs).

Here, Cases a, b, d, f, h, and i are Comparative Examples since calcium carbonate (CaCOs) contents in the total materials of respective hydraulic compositions were below 30 percent by mass. Cases c, e, g, and j are Example since calcium carbonate (CaCOs) contents in the total materials of respective hydraulic compositions were 30 percent by mass and more.

For the experiments, materials described below were used.

Water: tap water

Calcium carbonate (CaCOs) : light calcium carbonate, a density of 2.67 g/cm$^3$, a BET specific surface area of 5.0 m$^2$/g

Portland cement : ordinary Portland cement, a density of 3.16 g/cm$^3$, a Blaine specific surface area of 3270 cm$^2$/g, JIS R 5210

Blast furnace slag : ground granulated blast furnace slag 4000, a density of 2.89 g/cm$^3$, a Blaine specific surface area of 4480 cm$^2$/g, JIS A6206

Expansive additive : expansive additive type 30 (lime-based expansive additive), a density of 3.15 g/cm$^3$, a Blaine specific surface area of 3810 cm$^2$/g, JIS A6202

Slaked lime : special grade slaked lime, a density of 2.20 g/cm$^3$, all pass through 600 $\mu$m sieve, JIS R9001

Fly ash : fly ash type II, a density of 2.30 g/cm$^3$, a Blaine specific surface area of 4640 cm$^2$/g, JIS A6201

Table 1

| | CaCO₃ content (%) | Portland cement content accounting for powder except for CaCO₃ (%) | W/P | Water: W (g) | Hydraulic composition: P (g) | | | | | |
|---|---|---|---|---|---|---|---|---|---|---|
| | | | | | Portland cement | Blast furnace slag | Expansive additive | Slaked lime | Fly ash | CaCO₃ |
| Case a | 8.6 | 0.0 | 0.50 | 50.0 | 0.0 | 77.1 | 6.9 | 7.4 | 0.0 | 8.6 |
| Case b | 25.0 | 0.0 | 0.50 | 50.0 | 0.0 | 63.3 | 5.6 | 6.0 | 0.0 | 25.0 |
| Case c | 50.0 | 0.0 | 0.50 | 50.0 | 0.0 | 42.2 | 3.8 | 4.0 | 0.0 | 50.0 |
| Case d | 0.0 | 30.0 | 0.50 | 50.0 | 30.0 | 70.0 | 0.0 | 0.0 | 0.0 | 0.0 |
| Case e | 50.0 | 30.0 | 0.50 | 50.0 | 15.0 | 35.0 | 0.0 | 0.0 | 0.0 | 50.0 |
| Case f | 0.0 | 30.0 | 0.50 | 50.0 | 30.0 | 40.0 | 0.0 | 0.0 | 30.0 | 0.0 |
| Case g | 50.0 | 30.0 | 0.50 | 50.0 | 15.0 | 20.0 | 0.0 | 0.0 | 15.0 | 50.0 |
| Case h | 0.0 | 100.0 | 0.50 | 50.0 | 100.0 | 0.0 | 0.0 | 0.0 | 0.0 | 0.0 |
| Case i | 25.0 | 100.0 | 0.50 | 50.0 | 75.0 | 0.0 | 0.0 | 0.0 | 0.0 | 25.0 |
| Case j | 50.0 | 100.0 | 0.50 | 50.0 | 50.0 | 0.0 | 0.0 | 0.0 | 0.0 | 50.0 |

Water W was added to hydraulic compositions P and mixed, in which mix proportions of the hydraulic compositions P are shown in Table 1, and the water was added at a water-powder ratio W/P of 0.50. Specimens with a diameter of 3 cm and a height of 5 cm were made with obtained mixtures (paste) and were sealed-cured. Specimens were demolded at a material age of 28 days, and were stored at temperature of 20 °C and humidity of 60 percent for 7 days after demolding. Then, accelerated carbonation tests were conducted by coating surfaces of specimens other than the bases of respective specimens with an adhesive tape made of aluminum and placing the specimens under a condition of temperature of 20 °C, humidity of 60 percent and $CO_2$ concentration of 5 percent.

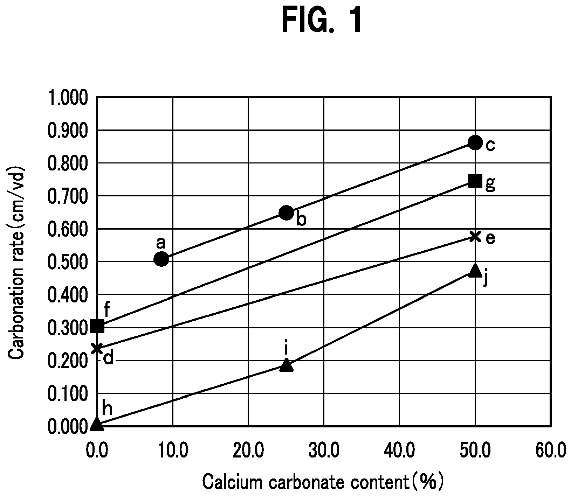

After 14 days or 28 days, the specimens were split and cross sections of the specimens were applied for being sprayed with concentration of 1 percent of a phenolphthalein alcohol solution. The accelerated carbonation depths were measured by detecting non-colored areas as areas where carbonation proceeded. The measurement results are shown in Table 2. It is known that carbonation progresses in proportion to the square root of a carbonation period, thereby a carbonation rate is calculated as the slope of a straight line in which relationships between changes of accelerated carbonation depths and square roots of carbonation periods (linear approximation) are approximated with a straight line. Namely, a carbonation rate indicates a rate of a carbonation depth change to a change of square roots of accelerated carbonation periods. The relationships between calcium carbonate (CaCOs) contents to carbonation rates are shown in FIG. 1.

Table 2

| | $CaCO_3$ content (%) | Portland cement content accounting for powder except for $CaCO_3$ (%) | Accelerated carbonation, 14 days (cm) | Accelerated carbonation, 28 days (cm) | Carbonation rate ( $cm / \sqrt{d}$ ) |
|---|---|---|---|---|---|
| Case a | 8.6 | 0.0 | 1.78 | 2.72 | 0.507 |
| Case b | 25.0 | 0.0 | 2.42 | 3.42 | 0.646 |
| Case c | 50.0 | 0.0 | 3.22 | 5.0 and more | 0.861 |
| Case d | 0.0 | 30.0 | 1.03 | 1.21 | 0.237 |
| Case e | 50.0 | 30.0 | 2.17 | 3.05 | 0.577 |
| Case f | 0.0 | 30.0 | 1.31 | 1.55 | 0.303 |
| Case g | 50.0 | 30.0 | 2.75 | 3.94 | 0.743 |
| Case h | 0.0 | 100.0 | 0.03 | 0.03 | 0.006 |
| Case i | 25.0 | 100.0 | 0.84 | 0.93 | 0.185 |
| Case j | 50.0 | 100.0 | 1.80 | 2.49 | 0.473 |

As shown in Table 2 and FIG. 1, in Cases a to c, when calcium carbonate (CaCOs) contents increased as Case a: 8.6 percent by mass; Case b: 25 percent by mass; and Case c: 50 percent by mass, the carbonation rates were Case a: 0.507 cm / √d; Case b: 0.646 cm / √d; and Case c: 0.861 cm / √d, resulting in that carbonation rates increased as calcium carbonate (CaCOs) contents increased.

Further, in Cases d to g where the effects of the differences of powder components under the same fixed condition of W/P = 0.5 were examined, the results were also that carbonation rates increased as calcium carbonate ($CaCO_3$) contents increased.

Furthermore, in Cases h to j, carbonation rates also increased as calcium carbonate ($CaCO_3$) contents increased.

In this way, carbonation rates tended to increase as calcium carbonate ($CaCO_3$) contents increased. Note that, the carbonation rate of Case j was lower than the carbonation rates of Cases c, e and g containing the same calcium carbonate ($CaCO_3$) content.

Then, as shown in FIG. 1, based on the comparison of Cases h, d, and f in which calcium carbonate ($CaCO_3$) were not added, carbonation rates may be higher by reducing Portland cement contents in powder except for calcium carbonate ($CaCO_3$) to 30 percent by mass and below.

On the other hand, when a calcium carbonate ($CaCO_3$) content in the total materials of a hydraulic composition (powder) is 30 percent by mass and above, regardless of the mix proportion of powder except for calcium carbonate ($CaCO_3$), a carbonation rate is expected to be equal to or greater than that of Case f in which Portland cement content was 30 percent by mass and below (the mix proportion of a case where an environmental load was intended to be reduced without using calcium carbonate ($CaCO_3$)). When a calcium carbonate ($CaCO_3$) content is 40 percent by mass and above, regardless of the mix proportion of powder except for calcium carbonate ($CaCO_3$), a carbonation rate is expected to be equal to or greater than that of Case d in which a Portland cement content was 30 percent by mass and below (the mix proportion of a case where an environmental load was intended to be reduced without using calcium carbonate ($CaCO_3$)).

Therefore, 30 percent by mass and above, preferably 40 percent by mass and above, of a calcium carbonate ($CaCO_3$) content in powder provides an effect equal to or greater than an effect of a case where Portland cement content in powder reduces, regardless of the components of a powder except for calcium carbonate ($CaCO_3$).

In this way, it was confirmed that a hydraulic composition with a high carbonation rate may be expected to take $CO_2$ from the atmosphere a lot more and to increase the amount of $CO_2$ to be fixed during a use.

Comparing Cases c, g, e and j in which calcium carbonate ($CaCO_3$) contents accounting for respective hydraulic compositions were equal to each other, carbonation rates tended to be high when blast furnace slag contents accounting for a hydraulic composition increased (namely when blast furnace slag contents accounting for powder except for calcium carbonate ($CaCO_3$) increased). Therefore, when blast furnace slag is contained in a hydraulic composition, a blast furnace slag content accounting for powder except for calcium carbonate ($CaCO_3$) is better to be high in a powder except for calcium carbonate ($CaCO_3$) (namely, blast furnace slag, Portland cement, an expansive additive, slaked lime, fly ash). Further, 40 percent or more by mass of blast furnace slag content accounting for powder except for calcium carbonate ($CaCOs$) is preferable.

(2) Compressive strength

In a case of using a hydraulic composition as a structural member, it is desirable to have compressive strength capable of withstanding load. So, for hydraulic composition mixed materials containing a hydraulic composition and a fine aggregate (sand), compressive strength after hardening (strength at a material age of 7 days, strength at a material age of 28 days) was measured when a calcium carbonate ($CaCO_3$) content in a hydraulic composition, a type and a content of each material except for calcium carbonate ($CaCO_3$) in a hydraulic composition, and a water-powder ratio were changed.

For the experiments, materials described below were used.

Water: tap water
Portland cement: ordinary Portland cement, a density of 3.16 $g/cm^3$, a Blaine specific surface area of 3270 $cm^2/g$, JIS R 5210
Blast furnace slag : ground granulated blast furnace slag 4000, a density of 2.89 $g/cm^3$, a Blaine specific surface area of 4480 $cm^2/g$, JIS A6206
Expansive additive : expansive additive type 30 (lime-based expansive additive), a density of 3.15 $g/cm^3$, a Blaine specific surface area of 3810 $cm^2/g$, JIS A6202
Slaked lime : special grade slaked lime, a density of 2.20 $g/cm^3$, all pass through 600 $\mu$m sieve, JIS R9001
Fly ash : fly ash type II, a density of 2.30 $g/cm^3$, a specific surface area of 4640 $cm^2/g$, JIS A6201
Calcium carbonate ($CaCO_3$) : light calcium carbonate, a density of 2.67 $g/cm^3$, a BET specific surface area of 5.0 $m^2/g$
Fine aggregate: a mixture of mountain sand produced in Kimitsu, crushed sand produced in Tsukumi, and crushed sand produced in Watarai, a saturated surface-dry density of 2.60 $g/cm^3$, a water absorption rate of 2.07 percent

Mix proportions are shown in Table 3. Further, the results of a strength test are shown in Table 4. Note that, Table 4 shows strength ratios (compressive strength ratios = Cases 1 to 4 / Cases A and B) under situations where water-powder ratios (W/P) of Cases 1 to 4 are equal to water-powder ratios (W/P) of Cases A and B and calcium carbonate ($CaCO_3$) contents of Cases 1 to 4 are equal to calcium carbonate ($CaCO_3$) contents of Cases A and B, in which hydraulic compositions of Cases 1 to 4 contain blast furnace slag and hydraulic compositions of Cases A and B are composed of Portland cement and calcium carbonate ($CaCO_3$). Here, the number "25", "50", and the like added to Cases 1 to 4 and Cases A and B indicate calcium carbonate ($CaCO_3$) contents (percent by mass) accounting for hydraulic compositions. Therefore, among Cases 1 to 4 and Cases A and B, Cases with numbers "0", "25", and "99" are Comparative Examples and the other Cases are Examples. Further in Table 4, for example, the compressive strength ratios described in the lines of Case 1-50 and Case 2-50 are the ratios to the strength of Case A-50, and the compressive strength ratio described in the line of Case 4-70 is the ratio to the strength of Case B-70. Furthermore, the compressive strength ratios described in the lines of Case 1-25 and Case 2-25 are the ratios to the strength of Case A-25.

Table 3

| | CaCO₃ content (%) | W/P | Quantity of a material per unit volume (kg/m³) | | | | | | | |
|---|---|---|---|---|---|---|---|---|---|---|
| | | | Water: W | Hydraulic composition: P | | | | | | Fine aggregate |
| | | | | Portland cement | Blast furnace slag | Expansive additive | Slaked lime | Fly ash | CaCO₃ | |
| Case 1-25 (Comparative Example) | 25 | 0.50 | 239 | 0 | 302 | 27 | 29 | 0 | 119 | 1431 |
| Case 1-50 | 50 | | 237 | 0 | 200 | 18 | 19 | 0 | 237 | 1422 |
| Case 1-70 | 70 | | 237 | 0 | 120 | 11 | 11 | 0 | 332 | 1422 |
| Case 1-90 | 90 | | 237 | 0 | 40 | 4 | 4 | 0 | 427 | 1422 |
| Case 2-25 (Comparative Example) | 25 | | 240 | 108 | 252 | 0 | 0 | 0 | 120 | 1440 |
| Case 2-50 | 50 | | 238 | 72 | 167 | 0 | 0 | 0 | 238 | 1430 |
| Case 2-70 | 70 | | 238 | 43 | 100 | 0 | 0 | 0 | 333 | 1427 |
| Case 2-90 | 90 | | 237 | 14 | 33 | 0 | 0 | 0 | 426 | 1420 |
| Case 3-25 (Comparative Example) | 25 | | 238 | 54 | 232 | 0 | 0 | 71 | 119 | 1427 |
| Case 3-70 | 70 | | 237 | 21 | 92 | 0 | 0 | 28 | 331 | 1420 |
| Case 4-25 (Comparative Example) | 25 | 0.35 | 180 | 326 | 29 | 31 | 0 | 0 | 129 | 1545 |
| Case 4-70 | 70 | | 179 | 130 | 12 | 12 | 0 | 0 | 358 | 1535 |

| | CaCO₃ content (%) | W/P | Quantity of a material per unit volume (kg/m³) | | | | | | | |
|---|---|---|---|---|---|---|---|---|---|---|
| | | | Water: W | Hydraulic composition: P | | | | | | Fine aggregate |
| | | | | Portland cement | Blast furnace slag | Expansive additive | Slaked lime | Fly ash | CaCO₃ | |
| Case A-0 (Comparative Example) | 0 | 0.50 | 244 | 487 | 0 | 0 | 0 | 0 | 0 | 1461 |
| Case A-25 (Comparative Example) | 25 | | 241 | 362 | 0 | 0 | 0 | 0 | 121 | 1448 |
| Case A-50 | 50 | | 240 | 240 | 0 | 0 | 0 | 0 | 240 | 1440 |
| Case A-70 | 70 | | 238 | 143 | 0 | 0 | 0 | 0 | 334 | 1430 |
| Case A-80 | 80 | | 238 | 95 | 0 | 0 | 0 | 0 | 380 | 1425 |
| Case A-90 | 90 | | 237 | 47 | 0 | 0 | 0 | 0 | 427 | 1422 |
| Case A-95 | 95 | | 237 | 24 | 0 | 0 | 0 | 0 | 450 | 1422 |
| Case A-99 (Comparative Example) | 99 | | 237 | 5 | 0 | 0 | 0 | 0 | 468 | 1419 |
| Case B-25 (Comparative Example) | 25 | 0.35 | 183 | 392 | 0 | 0 | 0 | 0 | 131 | 1568 |
| Case B-50 | 50 | | 182 | 260 | 0 | 0 | 0 | 0 | 260 | 1557 |
| Case B-70 | 70 | | 180 | 155 | 0 | 0 | 0 | 0 | 361 | 1545 |

Table 4

| | CaCO₃ content (%) | Portland cement content accounting for powder except for CaCO₃ (%) | Compressive strength (N/mm²) | | Compressive strength ratio | |
|---|---|---|---|---|---|---|
| | | | 7 days | 28 days | 7 days | 28 days |
| Case 1-25 (Comparative Example) | 25 | 0 | 17.6 | 24.9 | 0.662 | 0.743 |
| Case 1-50 | 50 | 0 | 13.6 | 19.7 | 1.12 | 1.13 |
| Case 1-70 | 70 | 0 | 8.68 | 9.23 | 1.69 | 1.10 |
| Case 1-90 | 90 | 0 | 1.61 | 3.96 | 1.04 | 1.54 |
| Case 2-25 (Comparative Example) | 25 | 30 | 19.7 | 29.3 | 0.741 | 0.875 |
| Case 2-50 | 50 | 30 | 12.9 | 18.4 | 1.07 | 1.06 |
| Case 2-70 | 70 | 30 | 8.21 | 11.6 | 1.59 | 1.39 |
| Case 2-90 | 90 | 30 | 2.02 | 3.93 | 1.30 | 1.53 |
| Case 3-25 (Comparative Example) | 25 | 15 | 13.0 | 18.4 | 0.489 | 0.549 |
| Case 3-70 | 70 | 15 | 5.26 | 12.2 | 1.02 | 1.46 |
| Case 4-25 (Comparative Example) | 25 | 0 | 25.2 | 36.3 | 0.655 | 0.831 |
| Case 4-70 | 70 | 0 | 13.7 | 17.4 | 1.22 | 1.12 |
| Case A-0 (Comparative Example) | 0 | 100 | 39.1 | 51.9 | - | - |
| Case A-25 (Comparative Example) | 25 | 100 | 26.6 | 33.5 | - | - |
| Case A-50 | 50 | 100 | 12.1 | 17.4 | - | - |
| Case A-70 | 70 | 100 | 5.15 | 8.37 | - | - |
| Case A-80 | 80 | 100 | 3.41 | 5.43 | - | - |
| Case A-90 | 90 | 100 | 1.55 | 2.57 | - | - |
| Case A-95 | 95 | 100 | 0.916 | 1.19 | - | - |
| Case A-99 (Comparative Example) | 99 | 100 | Not hardened | Not hardened | - | - |
| Case B-25 (Comparative Example) | 25 | 100 | 38.5 | 43.7 | - | - |
| Case B-50 | 50 | 100 | 21.9 | 29.3 | - | - |
| Case B-70 | 70 | 100 | 11.2 | 15.6 | - | - |

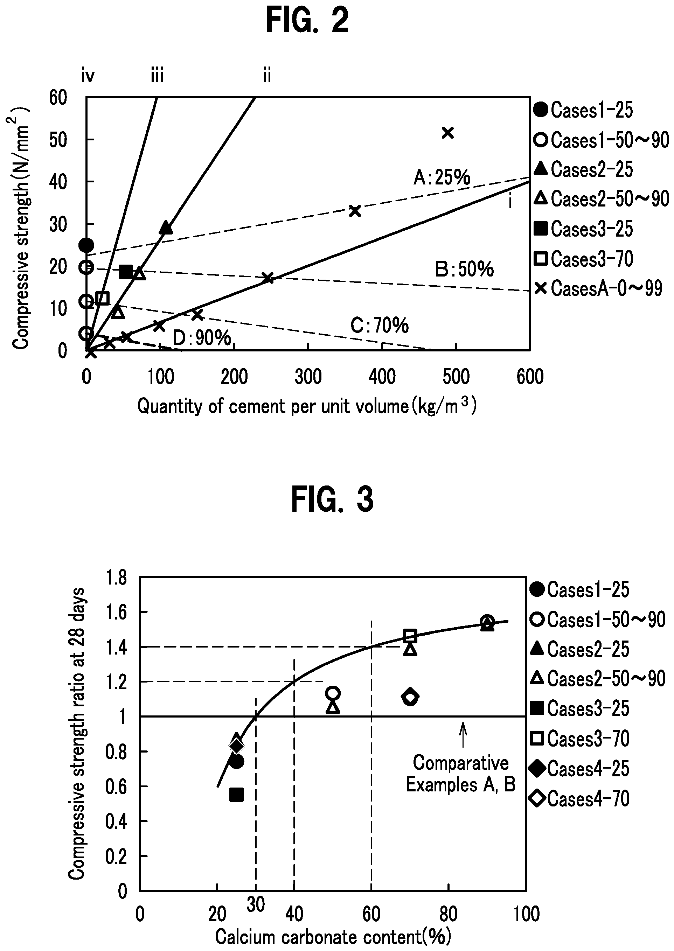

FIG. 2 is a graphical representation of relationships between a quantity of cement per unit volume (kg/m$^3$) and compressive strength at a material age of 28 days (refer to Table 4). To clarify properties of a hydraulic composition mixed material, W/P was fixed to 0.5. The results of hardened bodies (mortar) of mixtures with 0.5 W/P are described. In Cases A (among powder materials composing a hydraulic composition, Portland cement is the only powder material except for calcium carbonate ($CaCO_3$)), strengths reduced when calcium carbonate ($CaCO_3$) contents increased and Portland cement usages decreased. On the other hand, in Cases 1 to 3 (among powder materials composing a hydraulic composition, the other powder other than Portland cement was contained as the powder materials except for calcium carbonate ($CaCO_3$)), compressive strengths increased remarkably as compared to Cases A even under the condition of mix proportions with a small quantity of cement per unit volume. In this way, hydraulic compositions containing calcium carbonate ($CaCO_3$) have sufficient strength for practical use even though Portland cement usage largely decrease.

In FIG. 2, dot lines A to D are approximate lines connecting strengths of compositions of mix proportions having equal calcium carbonate (CaCOs) contents accounting for hydraulic compositions. Dot line A with a calcium carbonate (CaCOs) content accounting for a hydraulic composition of 25 percent by mass shows that strengths reduced as quantities of cement per unit volume decreased, resulting that an effect of improving the strength was not obtained by adjusting types of materials and contents of materials of a hydraulic composition. On the other hand, dot lines B to D with calcium carbonate ($CaCO_3$) contents accounting for hydraulic compositions of 50 to 90 percent by mass show that strengths increased as quantities of cement per unit volume decreased. Therefore, the hydraulic composition and the hydraulic composition mix material according to the present embodiment may have a remarkable effect of reducing a quantity of cement per unit volume without lowering a compressive strength by elevating a calcium carbonate ($CaCO_3$) content in a hydraulic composition.

Further straight lines i to iv in FIG. 2 are approximate lines of changes of strength of compositions of mix proportions in which Portland cement contents accounting for powder except for calcium carbonate ($CaCO_3$) were equal. The approximate lines are for measurement points where calcium carbonate ($CaCO_3$) contents accounting for respective hydraulic compositions were 50 percent by mass and more and effects on the strength were detected. Straight line i indicates a case where Portland cement content accounting for powder except for calcium carbonate ($CaCO_3$) was 100 percent by mass, straight lines ii, iii, and iv indicate cases where Portland cement contents accounting for powder except for calcium carbonate ($CaCO_3$) were 30 percent by mass, 15 percent by mass and 0 percent by mass, respectively. As straight lines i to iii in FIG.2 indicate, increasing rates of strength to increases of quantities of cement per unit volume were higher as Portland cement contents accounting for powder except for calcium carbonate ($CaCO_3$) were lower. Therefore, using blast furnace slag, an expansive additive, slaked lime and fly ash as powder except for calcium carbonate ($CaCO_3$) and decreasing a Portland cement content provide an extraordinary effect of elevating compressive strength without a large increase of a quantity of cement per unit volume.

FIG. 3 is a graphical representation of compressive strength ratios at 28 days (28d) indicated in Table 4. As shown in FIG. 2, FIG. 3 and Table 4, in cases where calcium carbonate (CaCOs) contents were 25 percent by mass (cases 1-25, 2-25, 3-25, and 4-25), the compressive strengths were lower than those of cases A-25 and B-25 where calcium carbonate (CaCOs) and Portland cement only existed. On the other hand, in cases where calcium carbonate (CaCOs) contents were 50 percent by mass and more (cases 1-50, 1-70, 1-90, 2-50, 2-70, 2-90, 3-70 and 4-70), the compressive strengths were higher than those of cases A-50, A-70, A-90, B-50 and B-70 where calcium carbonate (CaCOs) and Portland cement only existed. Namely, a compressive strength ratio is possibly over 1 when a calcium carbonate (CaCOs) content is over 25 percent by mass, and FIG. 3 indicates that a compressive strength ratio was over 1 when a calcium carbonate (CaCOs) content was over 30 percent by mass. Therefore, even when Portland cement is switched to a material using at least one selected from blast furnace slag, an expansive additive, slaked lime, quick lime, fly ash and Portland cement, if a calcium carbonate (CaCOs) content accounting for a hydraulic composition is 30 percent by mass and more, strength equal to or more than that of a hydraulic composition mix material containing only calcium carbonate (CaCOs) and Portland cement is exerted. Since a compressive strength ratio was over 1.2 generally when a calcium carbonate (CaCOs) content accounting for a hydraulic composition was 40 percent by mass and more, 40 percent by mass and more is preferable. Further, 60 percent by mass and more is more preferable since a compressive strength ratio was over 1.4 generally.

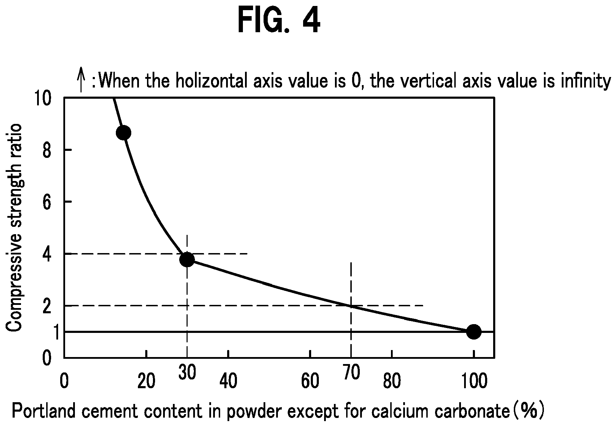

FIG. 4 indicates ratios of slopes of straight lines ii to iv to straight line i shown in FIG. 2. Since slopes of straight lines i to iv indicate compressive strengths per a quantity of cement per unit volume, slope ratios of straight lines ii to iv with respect to the straight line I are recognizable as ratios of compressive strengths at equal quantities of cement per unit volume, indicating them in the vertical axis as compressive strength ratios.

When Portland cement contents in powder except for calcium carbonate ($CaCO_3$) decreased, compressive strength ratios increased, thereby an effect of the present invention was detected. When Portland cement contents in powder except for calcium carbonate ($CaCO_3$) were 70 percent by mass and below, compressive strength ratios were beyond 2. When Portland cement contents in powder except for calcium carbonate ($CaCO_3$) were 30 percent by mass and below, the compressive strength ratios were beyond 4 generally. Therefore, 70 percent by mass and below of Portland cement contents in powder except for calcium carbonate ($CaCO_3$) is preferable, and 30 percent by mass and below is more preferable.

Further, as shown in results of cases 1-50, 1-70, 1-90, 2-50, 2-70 and 2-90 where Portland cement contents accounting for powder except for calcium carbonate ($CaCO_3$) were 30 percent by mass and below, compressive strength tended to be higher as a blast furnace slag content increased. Therefore, in a hydraulic composition, when a Portland cement content accounting for powder except for calcium carbonate ($CaCO_3$) is 30 percent by mass and below, a blast furnace slag content accounting for powder except for calcium carbonate ($CaCO_3$) is preferably 70 percent by mass and more, and 80 percent by mass and more is more preferable.

(3) Compressive strength upon changing calcium carbonate ($CaCO_3$) contents in a range of 42 to 70 percent

Next, for hydraulic composition mix materials containing a hydraulic composition of the present embodiment, a fine aggregate (sand), and a coarse aggregate (gravel), properties of the hydraulic composition mix materials were examined by changing calcium carbonate ($CaCO_3$) content in a range of 42 o 70 percent. Specifically, slumps and slump flows of mixtures containing hydraulic composition mix materials and water (hereinafter, sometime referred as "fresh concrete") and compressive strengths (strengths at a material age of 1 day, 7 days, 28 days) of hardened bodies of the mixtures (hereinafter, sometime referred as "concrete") were measured. Specimens (concrete) for a compressive strength test were demolded at a material age of 2 days, then standard underwater curing at 20 °C was performed. Further, in Examples 33, 35, and 38, sealed curing at 20 °C for 2 hours was performed followed by steam curing at 60 °C for 2.5 hours, and then compressive strengths were measured at a material age of 1 day.

For the experiments, materials described below were used.

Water: tap water
Blast furnace slag : ground granulated blast furnace slag 4000, a density of 2.89 g/cm$^3$, a Blaine specific surface area of 4480 cm$^2$/g, JIS A6206
Expansive additive : expansive additive type 30 (lime-based expansive additive), a density of 3.15 g/cm$^3$, a Blaine specific surface area of 3810 cm$^2$/g, JIS A6202
Slaked lime : special grade slaked lime, a density of 2.20 g/cm$^3$, all pass through 600 $\mu$m sieve, JIS R9001
Calcium carbonate ($CaCO_3$) : light calcium carbonate, a density of 2.67 g/cm$^3$, a BET specific surface area of 5.0 m$^2$/g
Fine aggregate: a mixture of mountain sand produced in Kimitsu, crushed sand produced in Tsukumi, and crushed sand produced in Watarai, a saturated surface-dry density of 2.60 g/cm$^3$, a water absorption rate of 2.07 percent
Coarse aggregate : crushed rocks produced in Oume, a maximum particle size of 20 mm, a saturated surface-dry density of 2.66 g/cm$^3$, a water absorption rate of 0.60 percent
Mix proportions of the present experiment are shown in Table 5. Further the results of the strength tests are shown in Table 6.

Table 5

| | CaCO$_3$ content (%) | W/P | Quantity of a material per unit volume (kg/m$^3$) | | | | | | |
|---|---|---|---|---|---|---|---|---|---|
| | | | Water: W | Hydraulic composition: P | | | | Fine aggregate | Coarse aggregate |
| | | | | Blast furnace slag | Expansive additive | Slaked lime | CaCO$_3$ | | |
| Example 31 | 42.3 | 0.292 | 200 | 333 | 30 | 32 | 290 | 503 | 794 |
| Example 32 | 430 | 0.230 | 155 | 333 | 30 | 32 | 290 | 633 | 781 |
| Example 33 | 45.0 | 0.241 | 155 | 310 | 28 | 29 | 277 | 617 | 832 |
| Example 34 | 45.0 | 0.305 | 175 | 269 | 24 | 26 | 256 | 623 | 839 |
| Example 35 | 45.0 | 0.399 | 155 | 182 | 16 | 17 | 173 | 720 | 971 |
| Example 36 | 49.0 | 0.226 | 155 | 333 | 30 | 32 | 280 | 538 | 887 |
| Example 37 | 52.1 | 0.212 | 175 | 333 | 30 | 32 | 430 | 432 | 793 |
| Example 38 | 70.0 | 0.281 | 155 | 140 | 13 | 13 | 386 | 635 | 893 |

Table 6

|  | Slump (cm) | Slump flow (cm) | Strength, 1 day (N/mm$^2$) | Strength, 7 days (N/mm$^2$) | Strength, 28 days (N/mm$^2$) | Steam curing, Strength, 1 day (N/mm$^2$) |
|---|---|---|---|---|---|---|
| Example 31 | - | 63.8 × 62.0 | 5.85 | 29.5 | 40.7 | - |
| Example 32 | - | 64.4 × 60.0 | 5.96 | 38.9 | 50.8 | - |
| Example 33 | - | 48.0 × 46.0 | 13.1 | 35.7 | 44.1 | 27.0 |
| Example 34 | - | 60.0 × 57.9 | - | 26.3 | 34.4 | - |
| Example 35 | 13.5 |  | - | 17.7 | 22.4 | 12.4 |
| Example 36 | - | 67.4 × 63.6 | 1.40 | 37.7 | 53.7 | - |
| Example 37 | - | 60.0 × 60.0 | 1.83 | 40.4 | 55.7 | - |
| Example 38 | 20.0 | - | - | 18.2 | 26.0 | 12.5 |
| - : not measured |  |  |  |  |  |  |

As shown in Table 6, fresh concrete of Examples 31, 32, 33, 34, 36 and 37 respectively had over 46.0 cm of slump flows and indicate high fluidity. They did not induce a material separation and were fresh concrete being capable to use as high-fluidity concrete. Further, fresh concrete of Example 35 had a slump of 13.5 cm and fresh concrete of Example 38 had a slump of 20 cm. In this way, ordinary fresh concrete without high fluidity may be produced also. Note that, ranges of a slump and a slump flow of normal concrete are defined by JIS A 5308. According to JIS regulation, a slump has to be in a range of 5.5 to 22.5 cm, and a slump flow has to be in a range of 37.5 to 70.0 cm. All fresh concrete produced this time met this requirement.

In Examples 31 to 38, compressive strengths of 17 to 40 N/mm$^2$ at a material age of 7 days, and compressive strengths of 22 to 55 N/mm$^2$ at a material age of 28 days. Compressive strength of 20 N/mm$^2$ and more was secured even though a lot of calcium carbonate (CaCO$_3$) with no hydration activity, such as 42 to 70 percent of total powder of a hydraulic composition, was added. Further, concrete with high strength over 40 N/mm$^2$ was produced by setting W/P to 0.241 and below.

As described above, for mix proportions with calcium carbonate (CaCO$_3$) contents of 42 to 70 percent by mass in powder composing a hydraulic composition, it is confirmed that fresh concrete having workability equal to that of ordinary concrete used in structural members such as reinforced concrete and the like may be produced, and concrete having compressive strength equal to that of ordinary concrete may be produced.

(4) Carbonation rates of hydraulic composition mix materials containing a nitrate compound or a nitrite compound

Pastes of hydraulic composition mix materials were prepared by mixing water into mix materials containing a nitrate compound and a hydraulic composition so that W/Ps were 0.305, and the pastes were hardened. In the hydraulic composition, calcium carbonate (CaCO$_3$) content was 45 percent by mass and the other material contents were equal to the contents shown in Table 7. Note that, when the nitrate compound contained bound water, the quantity of water to be added was determined by subtracting the value of bound water. Further, the quantity of the nitrate compound (calculated as a nitrate ion (NO$_3^-$)) to be added was determined by calculating the quantity of a nitrogen atom (N) as 0.45 percent by mass, so that the quantity of the nitrate compound was 2 percent by mass relative to 100 percent by mass of a hydraulic composition. Note that, the nitrate compound may be mixed with the hydraulic composition in a powder form, or may be mixed with the hydraulic composition after resolved in water. Further, Ca(NO$_2$)$_2$ · H$_2$O, and NaNO$_2$ are nitrite compounds and they are described as nitrite compounds in this invention. A nitrite ion (NO$_2^-$) was calculated as a nitrate ion (NO$_3^-$).

For the experiments, materials described below were used.

Water: tap water

Blast furnace slag : ground granulated blast furnace slag 4000, a density of 2.89 g/cm$^3$, a Blaine specific surface area of 4480 cm$^2$/g, JIS A6206

Expansive additive : expansive additive type 30 (lime-based expansive additive), a density of 3.15 g/cm$^3$, a Blaine specific surface area of 3810 cm$^2$/g, JIS A6202

Slaked lime : special grade slaked lime, a density of 2.20 g/cm$^3$, all pass through 600 $\mu$m sieve, JIS R9001

Calcium carbonate ($CaCO_3$) : light calcium carbonate, a density of 2.67 g/cm$^3$, a BET specific surface area of 5 m$^2$/g

$Ca(NO_2)_2 \cdot H_2O$ : Kanto Chemical Co., Inc., extra pure grade, (purity of 90 percent and above (titrimetry))

$Ca(NO_3)_2 \cdot 4H_2O$ : Kanto Chemical Co., Inc., JIS K8549 grade, (purity of 99.0 percent and above(subtracting method))

$Mg(NO_3)_2 \cdot 6H_2O$ : Kanto Chemical Co., Inc., JIS K8567 grade, (purity of 99.0 percent and above (titrimetry))

$NaNO_2$ : Kanto Chemical Co., Inc., JIS K8019 grade, (purity of 98.5 percent and above (titrimetry))

$NaNO_3$ : Kanto Chemical Co., Inc., JIS K8542 grade, (purity of 99.0 percent and above (titrimetry))

$KNO_3$ : Kanto Chemical Co., Inc., JIS K8548 grade, (purity of 99.0 percent and above (titrimetry))

$NH_4NO_3$ : Kanto Chemical Co., Inc., JIS K8545 grade, (purity of 99.0 percent and above (titrimetry))

Table 7

| Type of nitrate compound | CaCO$_3$ content (%) | W/P | NO$_3^-$ (P x %) | Water: W (g) (including bound water in a nitrate compound) | Hydraulic composition: P (g) | | | | Nitrate compound (g) |
|---|---|---|---|---|---|---|---|---|---|
| | | | | | Blast furnace slag | Expansive additive | Slaked lime | CaCO$_3$ | |
| No nitrate compound | 45.0 | 0.305 | 0.0 | 305 | 46.4 | 4.18 | 4.42 | 45.0 | 0.0 |
| Ca(NO$_2$)$_2$ H$_2$O | 45.0 | 0.305 | 2.0 | 305 | | | | | 33.9 |
| Ca(NO$_3$)$_2$ 4H$_2$O | 45.0 | 0.305 | 2.0 | 305 | | | | | 53.3 |
| Mg(NO$_3$)$_2$ 6H$_2$O | 45.0 | 0.305 | 2.0 | 305 | | | | | 57.9 |
| NH$_4$NO$_3$ | 45.0 | 0.305 | 2.0 | 305 | | | | | 20.1 |
| NaNO$_2$ | 45.0 | 0.305 | 2.0 | 305 | | | | | 15.6 |
| NaNO$_3$ | 45.0 | 0.305 | 2.0 | 305 | | | | | 192 |
| KNO$_3$ | 45.0 | 0.305 | 2.0 | 305 | | | | | 33.9 |

EP 4 169 886 A1

Specimens with a diameter of 3 cm and a height of 5 cm were prepared by using pastes obtained by mixing certain amounts of water and hydraulic composition mix materials whose mix proportions are shown in Table 7, and applied for sealed curing. The specimens were demolded at a material age of 28 days, specimens were stored for 7 days, at temperature of 20 °C, and humidity of 60 percent after demolding. Then, accelerated carbonation tests were conducted by coating surfaces of specimens other than the bases of respective specimens with an adhesive tape made of aluminum and placing the specimen under a condition of temperature of 20 °C, humidity of 60 percent and $CO_2$ concentration of 5 percent.

After certain periods were passed, the specimens were split, cross sections of the specimens were applied for being sprayed with concentration of 1 percent of a phenolphthalein alcohol solution, and the accelerated carbonation depths were measured by detecting non-colored areas as areas where carbonation was accelerated. The measurement results are shown in Table 8. It is known that carbonation progresses in proportion to the square root of a carbonation period, thereby a carbonation rate is calculated as the slope of a straight line in which relationships between changes of accelerated carbonation depths and square roots of carbonation periods (linear approximation) are approximated with a straight line. Namely, a carbonation rate indicates a rate of carbonation depth change to a change of square roots of accelerated carbonation periods.

Table 8

| Type of nitrate compound | Accelerated carbonation, 14 days (cm) | Accelerated carbonation, 28 days (cm) | Accelerated carbonation, 56 days (cm) | Carbonation rate ($cm \sqrt{d}$) | Carbonation rate ratio (no nitrate compound=1) |
|---|---|---|---|---|---|
| No nitrate compound | - | 1.39 | 2.30 | 0.299 | 1.00 |
| $Ca(NO_2)_2$ $H_2O$ | 0.50 | 0.73 | - | 0.137 | 0.46 |
| $Ca(NO_3)_2$ $4H_2O$ | 0.70 | 0.88 | - | 0.170 | 0.57 |
| $Mg(NO_3)_2$ $6H_2O$ | 0.66 | 1.00 | - | 0.187 | 0.62 |
| $NH_4NO_3$ | 1.12 | 1.70 | - | 0.317 | 1.06 |
| $NaNO_2$ | 1.40 | 1.51 | - | 0.302 | 1.01 |
| $NaNO_3$ | 1.11 | 1.69 | - | 0.315 | 1.05 |
| $KNO_3$ | 1.09 | 1.58 | - | 0.297 | 0.99 |
| -: not measured | | | | | |

As shown in Table 8, remarkable effects of carbonation prevention were detected when calcium nitrite monohydrate ($Ca(NO_2)_2 \cdot H_2O$), calcium nitrate tetrahydrate ($Ca(NO_3)_2 \cdot 4H_2O$), and magnesium nitrate hexahydrate ($Mg(NO_3)_2 \cdot 6H_2O$) were added respectively, in which carbonation rates reduced to 60 percent and below compared to the case where nitrate was not contained.

Therefore, it was confirmed that carbonation rates of hardened bodies of hydraulic composition mix materials were inhibited by adding calcium nitrite, calcium nitrate or magnesium nitrate.

(5) Carbonation rates of hydraulic composition mix materials containing a chemical admixture

Pastes of hydraulic composition mix materials were prepared by mixing water into mix materials containing a chemical admixture and a hydraulic composition so that W/Ps were 0.305. In the hydraulic composition, a calcium carbonate (CaCOs) content was 45 percent by mass and the other material contents were equal to the contents shown in Table 9. Then, the pastes was hardened. For obtained hardened bodies, accelerated carbonation tests were conducted and carbonation rates were calculated. The measurement results are shown in Table 10.

Note that, for the experiments, materials described below were used.

Water: tap water
Blast furnace slag : ground granulated blast furnace slag 4000, a density of 2.89 g/cm$^3$, a Blaine specific surface

area of 4480 $cm^2$/g, JIS A6206

Expansive additive : expansive additive type 30 (lime-based expansive additive), a density of 3.15 g/$cm^3$, a Blaine specific surface area of 3810 $cm^2$/g, JIS A6202

Slaked lime : special grade slaked lime, a density of 2.20 g/$cm^3$, all pass through 600 $\mu$m sieve, JIS R9001

Calcium carbonate ($CaCO_3$) : light calcium carbonate, a density of 2.67 g/$cm^3$, a BET specific surface area of 5.0 $m^2$/g

Chemical admixture : MasterSet FZP99, Pozzolith Solutions Ltd., a content of 24 percent by mass calculated as a nitrate ion ($NO_3^-$)

Table 9

| | CaCO$_3$ content (%) | W/P | NO$_3^-$ (P x %) | Water: W (g) (including chemical admixture) | Hydraulic composition: P (g) | | | | Chemical admixture (g) |
|---|---|---|---|---|---|---|---|---|---|
| | | | | | Blast furnace slag | Expansive additive | Slaked lime | CaCO$_3$ | |
| No nitrate compound | 45.0 | 0.305 | 000 | 30.5 | | | | | 0.0 |
| Chemical admixture 6 % | 45.0 | 0.305 | 1.44 | 30.5 | | | | | 60 |
| Chemical admixture 8 % | 45.0 | 0.305 | 1.92 | 30.5 | 46.4 | 4.18 | 4.42 | 45.0 | 80 |
| Chemical admixture 10% | 45.0 | 0.305 | 2.40 | 30.5 | | | | | 100 |
| Chemical admixture 12 % | 45.0 | 0.305 | 2.88 | 30.5 | | | | | 12.0 |

* Chemical admixture was added after being resolved in water

Specimens with a diameter of 3 cm and a height of 5 cm were prepared by using pastes obtained by mixing certain amounts of water and hydraulic composition mix materials whose mix proportions were shown in Table 9, and applied for sealed curing. The specimens were demolded and stored for 7 days, at temperature of 20 °C and humidity of 60 percent, after demolding. Then, accelerated carbonation tests were conducted by coating surfaces of specimens other than the base of respective specimens with an adhesive tape made of aluminum and placing the specimen under a condition of temperature of 20 °C, humidity of 60 percent and $CO_2$ concentration of 5 percent.

After certain periods were passed, the specimens were split, cross sections of the specimens were applied for being sprayed with concentration of 1 percent of a phenolphthalein alcohol solution, and the accelerated carbonation depths were measured by detecting non-colored areas as areas where carbonation was accelerated. The measurement results are shown in Table 10. It is known that carbonation progresses in proportion to the square root of a carbonation period, thereby a carbonation rate is calculated as the slope of a straight line in which relationships between changes of accelerated carbonation depths and square roots of carbonation periods (linear approximation) are approximated with a straight line. Namely, carbonation rate indicates a rate of carbonation depth change to a change of square roots of accelerated carbonation periods.

Table 10

| | Accelerated carbonation, 28 days (cm) | Accelerated carbonation, 56 days (cm) | Accelerated carbonation, 91 days (cm) | Carbonation rate ( $cm / \sqrt{d}$ ) | Carbonation rate ratio (no nitrate compound=1) |
|---|---|---|---|---|---|
| No nitrate compound | 1.39 | 2.30 | - | 0.299 | 1.00 |
| Chemical admixture 6 % | 0.81 | 1.28 | 1.80 | 0.168 | 0.56 |
| Chemical admixture 8 % | 0.64 | 1.03 | 1.77 | 0.135 | 0.45 |
| Chemical admixture 10 % | 0.47 | 0.86 | 1.39 | 0.110 | 0.37 |
| Chemical admixture 12 % | 0.46 | 0.77 | 1.39 | 0.100 | 0.33 |
| - : not measured | | | | | |

As shown in Table 10, remarkable effects of carbonation prevention were detected in the cases where a chemical admixture containing nitrate ions ($NO_3^-$) was added at 6 percent by mass and above (1 percent by mass and above by calculating to $NO_3^-$ ) to a hydraulic composition of 100 percent by mass, in which carbonation rates reduced to a half compared to the case where nitrate was not contained. Further carbonation rates decreased as increases of the amount of the chemical admixtures.

Therefore, it was confirmed that carbonation rates of hardened bodies of hydraulic composition mix materials were inhibited by adding nitrate calculated as a nitrate ion ($NO_3^-$) at 1 percent by mass and more to a hydraulic composition of 100 percent by mass.

(6) The properties of hydraulic compositions upon changing quantities of an expansive additive

Next, the properties of hydraulic compositions containing an expansive additive were examined. Expansive additive contents accounting for hydraulic compositions (powder) were changed in a range of 2 to 9 percent by mass. In the present experiment, hydraulic composition mix materials containing a hydraulic composition, a fine aggregate (sand) and a coarse aggregate (gravel) were mixed with water, and a slump or slump flows, initial setting times and final setting times of the obtained mixtures (hereinafter it may be referred as "fresh concrete") were measured. Further, compressive strengths (the strength at a material age of 28 days) and autogenous shrinkage strains of hardened bodies of mixtures (hereinafter it may be referred as "concrete") were measured.

The measurement method for the initial setting times and the final setting times were conducted by conforming to JIS A 1147 : 2019, Method of test for time of setting of concrete mixtures by penetration resistance.

Further, autogenous shrinkage strains were measured by conforming to a method of autogenous shrinkage strain test for high-fluidity concrete described in Committee Report on Super Workable Concrete II published by Public Interest Incorporated Association of Japan Concrete Institute. Namely, an embedment strain gauge was set in the center of each concrete prism specimen of 10 cm $\times$ 10 cm $\times$ 40 cm. After concrete placement, specimens were demolded at a material age of 2 days. The specimens were sealed with vinyl sheets in a room at 20 °C. Then amounts of shrinkage were measured up to 30 days of a material age, and measurement values were recognized as autogenous shrinkage strains.

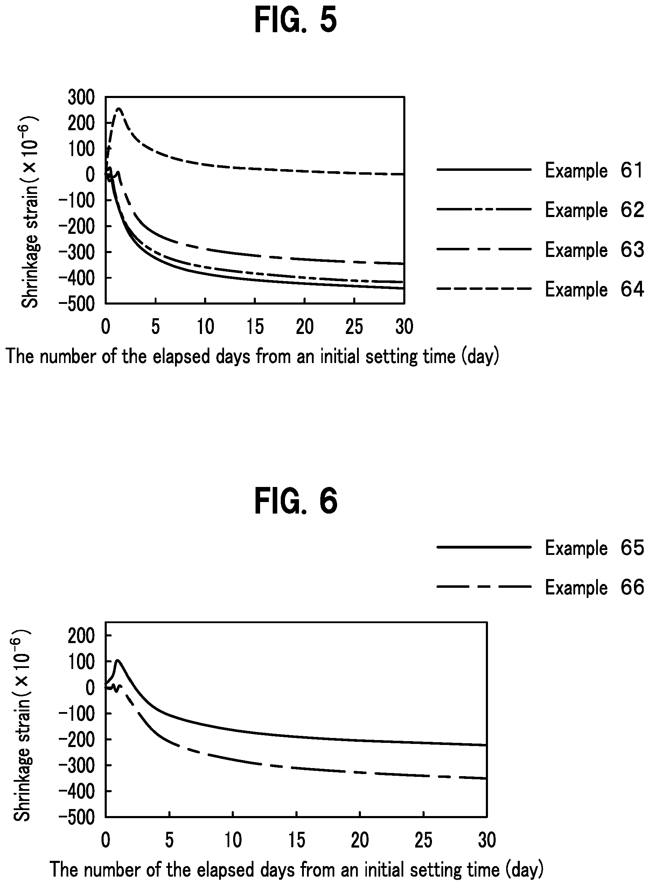

Mix proportions of the present experiment are shown in Table 11. Further, results of compressive strength tests are shown in Table 12, FIG. 5 and FIG. 6.

Note that, for the experiments, materials described below were used.

Water: tap water

Blast furnace slag : ground granulated blast furnace slag 4000, a density of 2.89 g/cm$^3$, a Blaine specific surface area of 4480 cm$^2$/g, JIS A6206

Expansive additive : expansive additive type 30 (lime-based expansive additive), a density of 3.15 g/cm$^3$, a Blaine specific surface area of 3810 cm$^2$/g, JIS A6202

Slaked lime : special grade slaked lime, a density of 2.20 g/cm$^3$, all pass through 600 $\mu$m sieve, JIS R9001

Calcium carbonate (CaCOs) : light calcium carbonate, a density of 2.6 g/cm$^3$, a BET specific surface area of 5.0 m$^2$/g

Fine aggregate: a mixture of mountain sand produced in Kimitsu, crushed sand produced in Tsukumi, and crushed sand produced in Watarai, a saturated surface-dry density of 2.60 g/cm$^3$, a water absorption rate of 2.07 percent

Coarse aggregate : crushed stones produced in Oume, a maximum particle size of 20 mm, a saturated surface-dry density of 2.66 g/cm$^3$, a water absorption rate of 0.60 percent

Table 11

| | CaCO$_3$ content (%) | Expansive additive content (%) | W/P | Quantity of a material per unit volume (kg/m$^3$) | | | | | | | |
| | | | | Water: W | Hydraulic composition: P | | | | Fine aggregate | Coarse aggregate |
| | | | | | Blast furnace slag | Expansive additive | Slaked lime | CaCO$_3$ | | |
|---|---|---|---|---|---|---|---|---|---|---|
| Example 61 | 39.8 | 2.2 | 0.242 | 155 | 340 | 140 | 32.0 | 255 | 618 | 982 |
| Example 62 | 44.5 | 4.2 | 0.242 | 155 | 300 | 27.0 | 29.0 | 285 | 618 | 982 |
| Example 63 | 47.4 | 6.4 | 0.242 | 155 | 271 | 41.0 | 26.0 | 303 | 618 | 982 |
| Example 64 | 51.9 | 8.9 | 0.242 | 155 | 229 | 57.0 | 22.0 | 332 | 621 | 834 |
| Example 65 | 49.8 | 7.9 | 0.276 | 175 | 245 | 50.0 | 23.0 | 316 | 601 | 808 |
| Example 66 | 44.5 | 5.2 | 0.305 | 175 | 263 | 30.0 | 25.0 | 256 | 626 | 842 |

Table 12

|  | Slump (cm) | Slump flow (cm) | Initial setting time (h) | Final setting time (h) | Strength, 28 days (N/mm$^2$) | Autogenous shrinkage strain (x 10$^{-6}$) |
|---|---|---|---|---|---|---|
| Example 61 | 19.5 | - | 7.8 | 11.6 | 45.4 | -442 |
| Example 62 | - | 54.6 x 54.4 | 12.1 | 16.3 | 46.2 | -417 |
| Example 63 | - | 54.7 x 52.5 | 11.0 | 15.7 | 48.0 | -347 |
| Example 64 | - | 58.7 x 49.0 | 8.4 | 13.2 | 43.7 | -0.16 |
| Example 65 | - | 56.9 x 54.9 | 10.7 | 16.4 | 39.1 | -222 |
| Example 66 | - | 59.4 x 58.8 | 13.2 | 19.1 | 34.3 | -353 |
| * For autogenous shrinkage strains, expansion is indicated as a positive value and shrinkage is indicated as a minus value. : not measured | | | | | | |

As shown in Table 12, slumps were 19 cm or the slump flows were 40.0 cm to 60.0 cm in all Examples, they were in the ranges of a slump and a slump flow for normal concreate conforming to JIS A 5308: the range of a slump is 6.5 to 22.5 cm and the range of a slump flow is 37.5 to 70.0 cm, thereby all examples had suitable fluidity. Further, compressive strengths of all Examples at a material age of 28 days were over 30 N/mm$^2$, thereby all examples had sufficient compressive strengths. Thus, hydraulic composition mix materials of Examples 61 to 66 had properties capable to be produced and to be constructed as concrete even when expansive additive contents accounting for hydraulic compositions were changed to 2 to 9 percent by mass (amounts of expansive additive usages were 14 to 57 kg/m$^2$).

Further, as shown in Table 12 and FIG. 5, the autogenous shrinkage strains of Examples 61 and 62 were -442 $\times$ 10$^{-6}$ and -417 $\times$ 10$^{-6}$, respectively. On the other hand, the autogenous shrinkage strains of Examples 63 and 64, in which the expansive additive contents accounting for hydraulic compositions were 6 percent by mass or 9 percent by mass, were largely reduced to -347 $\times$ 10$^{-6}$ and -0.16 $\times$ 10$^{-6}$, respectively. The autogenous shrinkage strains of Examples 65 and 66, in which the water quantity per unit concrete was larger than that of Examples 61 to 64, were also reduced by increasing the expansive additive contents (refer to FIG. 6).

In mix proportions with a calcium carbonate (CaCOs) content accounting for a hydraulic composition of 40 to 52 percent by mass, expansive additive contents were changed to 2 to 9 percent by mass, it was confirmed that concrete was producible by using the same method for normal concrete and autogenous shrinkage strain was controllable by adding additives.

(7) Properties of hardened bodies upon adding fiber materials

Next, the properties of hardened bodies (hereinafter it may be referred as "concrete") of hydraulic composition mixed materials containing a hydraulic composition of the present embodiment, a fiber material, a fine aggregate, and a coarse aggregate were examined. Specifically, slumps or slump flows of mixtures of a hydraulic composition mixed material and water (hereinafter it may be referred as "fresh concrete"), and compressive strengths of hardened bodies of the mixtures (strength at a material age of 1 day, 2 days, and 28 days) were measured.

For the experiments, materials described below were used.

Water: tap water
Blast furnace slag : ground granulated blast furnace slag 4000, a density of 2.89 g/cm$^3$, a Blaine specific surface area of 4480 cm$^2$/g, JIS A6206
Expansive additive : expansive additive type 30 (lime-based expansive additive), a density of 3.15 g/cm$^3$, a Blaine specific surface area of 3810 cm$^2$/g, JIS A6202
Slaked lime : special grade slaked lime, a density of 2.20 g/cm$^3$, all pass through 600 $\mu$m sieve, JIS R9001
Calcium carbonate (CaCO$_3$) : light calcium carbonate, a density of 2.67 g/cm$^3$, a Blaine specific surface area of

4350 cm$^2$/g

Fine aggregate : a mixture of land sand produced in Namekata and crushed limesand produced in Sano, a saturated surface-dry density of 2.64 g/cm$^3$, a water absorption rate of 1.91 percent

Coarse aggregate : crushed limestone produced in Sano, a maximum particle size of 20 mm, a saturated surface-dry density of 2.71 g/cm$^3$, a water absorption rate 0.97 percent

Fiber material: steel fiber, 35 mm long (Dramix®3D, Bekaert Japan)

Chemical admixture : MasterSet FZP99, Pozzolith Solutions Ltd., a content of 24 percent by mass calculated as a nitrate ion ($NO_3^-$)

The mix proportions for the present experiment are shown in Table 13. Further, the results of strength tests are shown in Table 14.

Table 13

| | CaCO$_3$ content (%) | W/P | Quantity of a material per unit volume (kg/m$^3$) | | | | | | | | |
| | | | Water: W | Hydraulic composition: P | | | | Fine aggregate | Coarse aggregate | Chemical admixture | Fiber material |
| | | | | Blast furnace slag | Expansive additive | Slaked lime | CaCO$_3$ | | | | |
|---|---|---|---|---|---|---|---|---|---|---|---|
| Example 71 | 44.6 | 0.305 | 175 | 263 | 30 | 25 | 256 | 753 | 775 | 34.4 | 39.0 |
| Example 72 | 44.6 | 0.305 | 175 | 263 | 30 | 25 | 256 | 753 | 775 | 0 | 39.0 |
| Example 73 | 44.6 | 0.305 | 184 | 277 | 32 | 26 | 270 | 723 | 747 | 0 | 39.0 |
| Example 74 | 46.4 | 0.305 | 184 | 270 | 50 | 15 | 290 | 719 | 740 | 0 | 39.0 |

Table 14

|  | Slump flow after mixing a fiber material (cm) | Strength 1 day (N/mm$^2$) | Strength 2 days (N/mm$^2$) | Strength 7 days (N/mm$^2$) | Strength 28 days (N/mm$^2$) |
|---|---|---|---|---|---|
| Example 71 | 67.2 x 64.9 | 10.6 | 23.1 | - | 58.1 |
| Example 72 | 58.1 x 56.4 | 8.02 | 17.1 | - | 43.2 |
| Example 73 | 56.2 x 54.3 | 5.52 | 14.3 | 27.6 | 40.1 |
| Example 74 | 56.3 x 55.9 | 5.35 | 16.3 | - | 46.0 |
| - : not measured | | | | | |

As shown in Table 14, in Examples 71, 72, 73 and 74, slump flows of fresh concrete (hydraulic composition mixed materials after adding steel fibers) were over 50.0 cm, thereby the fresh concrete had high fluidity. Without segregation of steel fibers or aggregates, fresh concrete usable for construction in good condition was produced. Note that, the range of slump flow for normal concrete is determined by JIS A 5308, which requires that the slump flow is in a range of 37.5 to 70.0 cm. All fresh concrete after mixing with steel fibers produced this time meet this requirement.

In Examples 71, 72, 73 and 74, compressive strengths at a material age of 1 day were 5 to 10 N/mm$^2$, compressive strengths at a material age of 2 days were 14 to 23 N/mm$^2$, and compressive strengths at a material age of 28 days were 40 to 58 N/mm$^2$. Although calcium carbonate (CaCOs) does not have hydration activity, even when a calcium carbonate (CaCOs) content was high as 46.4 percent by mass, compressive strength securely remained 40 N/mm$^2$ and more. Further, in addition to flexural strength, increase of compressive strength is expected by adding steel fibers. For example, although Example 72 was substantially the same as the material in which a steel fiber was added to Example 66 (refer to Table 11), the compressive strength of Example 66 that didn't have a steel fiber was 34 N/mm$^2$ at a material age of 28 days, while the compressive strength of Example 72 that had a steel fiber was 43 N/mm$^2$ at a material age of 28 days.

These results indicate that even hydraulic composition mixed materials having a high calcium carbonate (CaCOs) content accounting for a hydraulic composition and being added a fiber material may produce concrete having the same workability and the same compressive strength as that of ordinal fiber-reinforced concrete.

(8) Effects of polishing

Next, for a hardened body of a hydraulic composition mixed material containing a hydraulic composition of the present embodiment, a fine aggregate, and a coarse aggregate, the effect of polishing the surface of the hardened body was examined. The hydraulic composition mixed material described below had a calcium carbonate (CaCOs) content accounting for a hydraulic composition of 41.3 percent by mass. Water was added to a hydraulic composition mixed material (a hydraulic composition, a fine aggregate, and a coarse aggregate) and mixed, the mixture was poured into a mold and cured, then a prism specimen of 15 cm $\times$ 15 cm $\times$ 1cm thick was prepared. The prepared specimen was applied for sealed curing outside (the outside temperature of 0 to 7 °C) up to 14 days of a material age followed by demolding, then polished by using a polisher for stone materials with a particle degree of # 400. The mix proportion was shown in Table 15.

Note that, for the experiments, materials described below were used.

Water: tap water
Blast furnace slag : ground granulated blast furnace slag 4000, a density of 2.89 g/cm$^3$, a Blaine specific surface area of 4480 cm$^2$/g, JIS A6206
Expansive additive : expansive additive type 30 (lime-based expansive additive), a density of 3.15 g/cm$^3$, a Blaine specific surface area of 3810 cm$^2$/g, JIS A6202
Slaked lime : special grade slaked lime, a density of 2.20 g/cm$^3$, all pass through 600 $\mu$m sieve, JIS R9001
Calcium carbonate (CaCO$_3$) : light calcium carbonate, a density of 2.67 g/cm$^3$, a BET specific surface area of 5.0 m$^2$/g
Fine aggregate : crushed granite sand produced in Inada, a saturated surface-dry density of 2.60 g/cm$^3$, a water

absorption rate of 0.38 percent

Coarse aggregate : crushed granite stone produced in Inada, a maximum particle size of 12 mm, a saturated surface-dry density of 2.62 g/cm$^3$, a water absorption rate of 0.64 percent

Table 15

| | CaCO$_3$ content (%) | W/P | Quantity of a material per unit volume (kg/m$^3$) | | | | | | |
| | | | Water: W | Hydraulic composition: P | | | | Fine aggregate | Coarse aggregate |
| | | | | Blast furnace slag | Expansive additive | Slaked lime | CaCO$_3$ | | |
| Example 81 | 41.3 | 0.291 | 190 | 319 | 28.7 | 30.3 | 277 | 672 | 677 |

The specimen (hardened body of a hydraulic composition mixed material) was stored inside of a room at temperature of 20 °C. At a material age of 28 days, an accelerated test for 5000 hours was conducted under a condition of wet-dry cycles of 2 hours (dry: 102 minutes, wet: 18 minutes) and irradiation strength of 60 W/m$^2$ by using an accelerated weathering test machine (XER-W75, Iwasaki Electric Co., Ltd.). L*a*b* color spaces (JIS Z8781-4) of 24 points selected from hardened paste parts of the specimen (non-aggregate parts) were measured at 0, 500, 1000, 2000, 3000, 4000 and 5000 hours by using a spectrophotometer (NF33, Nippon Denshoku Industries Co., Ltd.), and average values were calculated, followed by evaluations by comparing with that of the specimen at 0 hour.

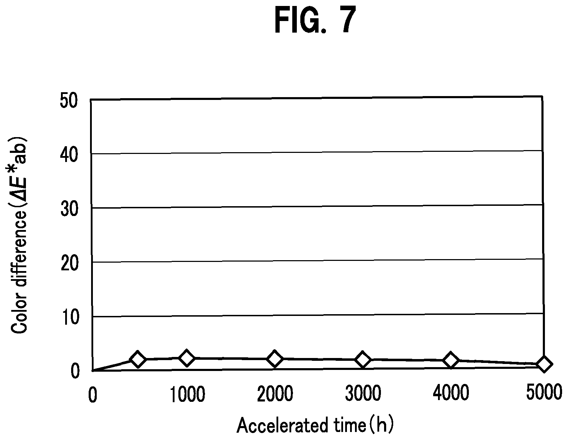

The prepared specimen was smooth and flat without any damage like a chip of an aggregate by polishing, and became finishing materials resembling stone material like marble. As shown in FIG.7, color changes were not detected even after 5000 hours, thereby it was confirmed that discoloration by UV and the like did not occur.

Further, a column specimen with a diameter of 10 cm and a height of 10 cm was prepared differently and applied for sealed curing. A compressive strength test was conducted for the specimen at a material age of 28 days. The compressive strength of the specimen was 36.2 N/m$^2$.

Finishing material resembling stone material was obtained by polishing a hardened body of a hydraulic composition mixed material containing a lot of calcium carbonate ($CaCO_3$). Further, the weathering test confirmed that discoloration of hardened bodies did not occur.

Hereinabove, the embodiments of the present invention has been described, but the present invention is not limited thereto and each component described above may be modified optionally within the scope of the present invention.

For example, calcium carbonate ($CaCO_3$), blast furnace slag, expansive additive, slaked lime, quick lime, fly ash and materials composing Portland cement are not limited to those indicated in the embodiments.

**Claims**

1. A hydraulic composition comprising calcium carbonate, wherein a content of the calcium carbonate is in a range of 30 percent by mass to 95 percent by mass.

2. The hydraulic composition of claim 1 further comprising blast furnace slag.

3. The hydraulic composition of claim 2 further comprising slaked lime and an expansive additive.

4. The hydraulic composition of any one of claims 1 to 3 further comprising an expansive additive in a range of 2 to 9 percent by mass.

5. The hydraulic composition of claim 1 further comprising at least one material selected from blast furnace slag, an expansive additive, slaked lime, quick lime, fly ash and Portland cement.

6. The hydraulic composition of any one of claims 1 to 5 further comprising Portland cement at a content of 30 percent by mass and below in materials except for the calcium carbonate.

7. A hydraulic composition mixed material comprising the hydraulic composition of any one of claims 1 to 6 and a nitrate compound, wherein the hydraulic composition mixed material comprises the nitrate compound at a content of 1 to 3 percent by mass calculated as a nitrate ion relative to the hydraulic composition of 100 percent by mass.

8. A hydraulic composition mixed material comprising the hydraulic composition of any one of claims 1 to 6 and at least one selected from a fiber material, an aggregate and a chemical admixture.

9. A hydraulic composition mixed material comprising the hydraulic composition of any one of claims 1 to 6, a nitrate compound, and at least one selected from a fiber material, an aggregate, and a chemical admixture, wherein the hydraulic composition mixed material comprises the nitrate compound at a content of 1 to 3 percent by mass calculated as a nitrate ion relative to the hydraulic composition of 100 percent by mass.

10. A hardened body being configured with the hydraulic composition of any one of claims 1 to 6.

11. The hardened body of claim 10, wherein a surface is polished.

12. A hardened body being configured with the hydraulic composition mixed material of any one of claims 7 to 9.

**13.** The hardened body of claim 12, wherein a surface is polished.

# FIG. 1

# FIG. 2

# FIG. 3

# FIG. 4

↑ : When the holizontal axis value is 0, the vertical axis value is infinity

Compressive strength ratio (vertical axis: 0, 1, 2, 4, 6, 8, 10)

Portland cement content in powder except for calcium carbonate (%) (horizontal axis: 0, 20, 30, 40, 60, 70, 80, 100)

# FIG. 5

# FIG. 6

# FIG. 7

<div align="center">

**INTERNATIONAL SEARCH REPORT**

</div>

| International application No. |
|---|
| PCT/JP2021/022805 |

**A. CLASSIFICATION OF SUBJECT MATTER**
C04B 18/08(2006.01)i; C04B 18/14(2006.01)i; C04B 22/06(2006.01)i; C04B
22/08(2006.01)i; C04B 28/04(2006.01)i; C04B 28/08(2006.01)i
FI:     C04B28/08; C04B28/04; C04B22/06 Z; C04B18/08 Z; C04B22/08 A;
        C04B18/14 A

According to International Patent Classification (IPC) or to both national classification and IPC

**B. FIELDS SEARCHED**

Minimum documentation searched (classification system followed by classification symbols)
C04B18/08; C04B18/14; C04B22/06; C04B22/08; C04B28/04; C04B28/08

Documentation searched other than minimum documentation to the extent that such documents are included in the fields searched
|  |  |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-145033 A (DENKA COMPANY LIMITED) 20 September 2018 (2018-09-20) claims, paragraphs [0012], [0020]-[0021], [0032], table 4 | 1-6, 8, 10-13 |
| Y | claims, paragraphs [0012], [0020]-[0021], [0032], table 4 | 3, 7, 9 |
| X | JP 1-167267 A (DENKI KAGAKU KOGYO KABUSHIKI KAISHA) 30 June 1989 (1989-06-30) claims, page 2, upper right column, line 19 to lower right column, line 3, tables 1, 2 | 1-2, 4-6, 8, 10-13 |
| Y | claims, page 2, upper right column, line 19 to lower right column, line 3, tables 1, 2 | 3, 7, 9 |
| Y | JP 2003-95718 A (DENKI KAGAKU KOGYO KABUSHIKI KAISHA) 03 April 2003 (2003-04-03) claims, paragraph [0006] | 7, 9 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 August 2021 (03.08.2021) | 17 August 2021 (17.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| INTERNATIONAL SEARCH REPORT<br>Information on patent family members | | International application No.<br>PCT/JP2021/022805 |
|---|---|---|

| Patent Documents<br>referred in the<br>Report | Publication<br>Date | Patent Family | Publication<br>Date |
|---|---|---|---|
| JP 2018-145033 A | 20 Sep. 2018 | (Family: none) | |
| JP 1-167267 A | 30 Jun. 1989 | (Family: none) | |
| JP 2003-95718 A | 03 Apr. 2003 | (Family: none) | |

Form PCT/ISA/210 (patent family annex) (January 2015)

## REFERENCES CITED IN THE DESCRIPTION

**Patent documents cited in the description**

- JP 2020051117 A